# EUROPEAN PATENT SPECIFICATION

(11) **EP 1 829 780 B1**
(45) Date of publication and mention of the grant of the patent: **27.10.2010**
(21) Application number: 06022723.8
(22) Date of filing: 28.02.2006
(51) Int. Cl.: B62M 9/12, B62K 25/02

(54) **Derailleur**
Umwerfer
Dérailleur

(43) Date of publication of application: 05.09.2007
(62) Divisional of application: 06004024.3
(73) Proprietor: SHIMANO INC., Osaka 590-8577 (JP)
(72) Inventor: Shahana, Satoshi, Sakai City 590-8577 Osaka (JP); Yamaguchi, Souta, Sakai City 590-8577 Osaka (JP); Watarai, Etsuyoshi, Sakai City 590-8577 Osaka (JP)
(74) Representative: Hofmann, Harald

(56) References cited:
- EP-A1- 0 655 386
- EP-A2- 1 475 300
- BE-A- 425 459
- CH-A- 284 668
- DE-A1- 19 915 334
- DE-U1- 9 422 229
- FR-A- 760 565
- FR-A- 799 947
- US-A- 534 680
- US-A- 4 406 643

## Description

### BACKGROUND OF THE INVENTION

The present invention is directed to bicycles and, more particularly, to a low profile rear derailleur used to switch a chain among a plurality of sprockets that rotate with the rear wheel.

A bicycle rear derailleur is used to selectively engage a chain with one of a plurality of sprockets that rotate with the rear wheel of the bicycle. A typical rear derailleur comprises a base member, a movable member supporting a chain guide, and a linking mechanism coupled between the base member and the movable member so that the chain guide moves laterally relative to the base member. The base member usually is mounted to the rear end of the bicycle frame by a mounting bolt that screws into a threaded opening formed in the frame. Because of the nature of the lateral movement of the chain guide required to switch the chain among the sprockets, the linking mechanism, the movable member and the chain guide all protrude laterally outward by a significant distance, especially when the chain is engaged with the laterally outermost rear sprocket. As a result, the chain guide is susceptible to striking or becoming entangled with nearby objects, especially when riding off-road in mountainous terrain. The effect becomes more severe as the number of sprockets increase. Document DE 94 22 229 describes a rear derailleur wherein a mounting bracket is provided for mounting the movable member on a bicycle frame. This document describes a bicycle rear assembly according to the preamble of claim 1.

### SUMMARY OF THE INVENTION

According to the present invention a bicycle rear assembly comprises a bicycle frame end and a rear derailleur. The bicycle frame end comprises a main body defining an axle receiving opening dimensioned to receive a bicycle wheel axle therein to rotate around a rotational axis, and a derailleur attachment structure located from approximately 180° to approximately 240° relative to the axle receiving slot, when rotating in a counter clockwise direction. The slot comprises an open end and a closed end wherein the closed end forms an origin of a reference system in the main bicycle frame end plane, with a zero axis being mainly orthogonal to a vertical plane comprising the rotational axis (X) forward of the closed end. The rear derailleur is comprising: a base member structured to be mounted at a rear end of the bicycle frame at a location from approximately 180° to approximately 240° relative to the axle receiving slot, when rotating in a counter clockwise direction in the main bicycle frame end plane; a movable member that supports a chain guide including a guide pulley that rotates around a first pulley axis, and a first linking member coupled between the base member and the movable member so that chain guide moves laterally relative to the base member between a first lateral position and a second lateral position. By providing for such a configuration a low profile rear derailleur is obtained.
A method of mounting a bicycle rear derailleur having a base member, a movable member that supports a chain guide including a first pulley that rotates around a first pulley axis and a second pulley below the first pulley to rotate around a second pulley axis, and a first linking member coupled between the base member and the movable member so that the chain guide moves laterally relative to the base member between a laterally outermost position and a laterally innermost position comprises the steps of: providing a bicycle frame end comprising a main body defining an axle receiving opening dimensioned to receive a bicycle wheel axle therein to rotate around a rotational axis, the axle receiving opening being a slot including an open end and a closed end, wherein the bicycle frame end mainly extends in a main bicycle frame end plane including said slot, wherein the closed end forms an origin of a reference system in the main bicycle frame end plane, with a zero axis being mainly orthogonal to a vertical plane comprising the rotational axis forward of the closed end; and a derailleur attachment structure located from approximately 180° to approximately 240° relative to the axle receiving slot when rotating in a counterclockwise direction; mounting the base member to the bicycle frame end directly at a location from approximately 180° to approximately 240° relative to closed end of the axle receiving slot when rotating in a counterclockwise direction in the main bicycle frame end plane; and positioning the movable member so that the first pulley is located at a range of from approximately 220° to approximately 270° relative to closed end of the axle receiving slot when the chain guide is located at the laterally outermost position.

Preferably the linking mechanism includes a pair of link members, comprising a first link member and a second link member. A pair of link members allows for pivotal movement in conjunction with structural integrity.

Preferably said space between said plane being parallel to said pulley at a laterally innermost edge of the movable member, and said main central plane of said pulley coincides with a space defined by respective planes being parallel to said main central plane or to said pulley at laterally innermost and outermost edges of any among the base member, the movable member and the linking mechanism, in at least one position of the pulley such that at least 80%, in particular 90%, most particularly 100% of one space are contained within the other space.

Preferably said space between said plane being parallel to said pulley at a laterally innermost edge of the movable member, and said main central plane of said pulley coincides with a space defined by respective planes being parallel to said main central plane or to said pulley at laterally innermost and outermost edges of the linking mechanism, in at least one position of the pulley such that at least 80%, in particular 90%, most particularly 100% of one space are contained within the other space.

Preferably said space between said plane being parallel to said pulley at a laterally innermost edge of the movable member, and said main central plane of said pulley coincides with a space defined by respective planes being parallel to said main central plane or to said pulley at laterally innermost and outermost edges of a space circumscribed by respective barycentres of the base member, the movable member and the linking mechanism, in at least one position of the pulley such that at least 80%, in particular 90%, most particularly 100% of one space are contained within the other space. This coincidence allows for a well balanced configuration of the derailleur.

Preferably said space between said plane being parallel to said pulley at a laterally innermost edge of the movable member, and said main central plane of said pulley coincides with a space defined by respective planes being parallel to said main central plane or to said pulley at laterally innermost and outermost edges of a space circumscribed by respective inner surfaces of the base member, the movable member and the linking mechanism, in at least one position of the pulley such that at least 80%, in particular 90%, most particularly 100% of one space are contained within the other space.

Preferably said coincidence in space occurs in at least 30%, in particular in at least 60% and most particularly in at least 80% of possible positions of the pulley during operation. In other words the derailleur is configured such that over a noticeable range of the possible positions of the pulley the linking mechanism is at least in part in register with the space occupied by the sprockets of a wheel to which the derailleur is associated.

Preferably said coincidence in space occurs in all of possible positions of the pulley during operation except the latterly outermost and/or innermost position of said pulley. Of course the coincidence of the spaces may also occur in the extreme positions of the derailleur, as long as said coincidence occurs over a noticeable range of possible positions of said pulley.

Preferably said coincidence in space occurs such that said centre pulley plane and/or said plane being parallel to said pulley at a laterally innermost edge of the movable member intersects both link members in the rest position.

Preferably a surface perpendicular to pivot axis of the link members and being defined by said pivot axis is substantially rectangular in a position of the pulley substantially centred between first and second predefined positions, corresponding to the largest and the smallest selectable gear, corresponding to one of the laterally innermost and outermost positions, respectively. Accordingly, when the respective adjacent surfaces to the space are planar the space created there between is maximized in an intermediate position of the pulley. This allows to have a relatively small return spring that can be easily mounted within this space.

Preferably said space defined by the base member, the movable member and the linking mechanism is substantially parallelepiped shaped, in particular changing in operation of the derailleur from a slanted parallelepiped shape to a substantially rectangular cubic form and further to a differently slanted parallelepiped shape. It is to be noted that the parallelepiped shape can be defined by respective outer surfaces, inner surfaces or the center planes of the constituting elements. As before with respect to the rectangular shape it is contemplated to observe the derailleur in a direction substantially corresponding to one or all of the pivot axis. Hence one can observe the interrelation of, e.g. two link members forming in such view a parallelogram together with the base member and the movable member. In one most preferred embodiment the parallelepiped shape will be substantially cubic in an intermediate position, thus allowing the shift operation by only slightly deforming the cubic form in the one or the other direction for creating a respectively tilted or slanted parallelepiped shape. Such a configuration allows the use of parts not requiring too high structural integrity since the biasing may be little.

Preferably said pair of link members are pivotably coupled to the base member by a pair of first pivot shafts, and to the movable member by a pair of second pivot shafts extending from one edge of the respective link member to the opposite one, and wherein said plane being parallel to said pulley at a laterally innermost edge of the movable member is intersected by at least one of the pair of second pivot shafts.

Preferably said pair of link members are pivotably coupled to the base member by a pair of first pivot shafts, and to the movable member by a pair of second pivot shafts extending from one edge of the respective link member to the opposite one, and wherein said plane being parallel to said pulley at a laterally innermost edge of the movable member is intersected by at least one of the pair of second pivot shafts. It is to be noted that the pivot shafts form part of the linking mechanism.

Preferably at least one of said link members and/or at least one of said pivot axis being slanted with respect to the pulley centre plane. In a particularly preferred embodiment the slant is such that the linking mechanism can take a configuration such as to substantially extend in parallel to a line touching the various sprockets of a wheel to which the derailleur is associated.

Preferably said linking mechanism is having a cable fixation portion, in particular on a portion protruding beyond one of the pivot axis. In a preferred embodiment the cable fixing portion is provided on one of the link members.

Preferably said base member is having a cable sleeve fixation portion, in particular substantially extending in a direction corresponding to the pivotal movement of the link members.

Preferably the rear derailleur is having two pulleys each having a pulley mount portion.

Preferably at least one, in particular each pulley mount portion is journaled with respect to an axis different of the axis of the pulley.

Preferably one of the pulley mount portions is a floating mount portion, in particular having a counter weight portion.

The present invention is thus directed to various features of a bicycle rear derailleur. In one embodiment, a bicycle rear derailleur comprises a base member; a movable member that supports a chain guide including a first pulley that rotates around a first pulley axis,
wherein the pulley has a pulley plane or a main central plane; and a first linking member coupled between the base member and the movable member so that the chain guide moves laterally relative to the base member between a first lateral position and a second lateral position. The pulley plane intersects the first linking member when the chain guide is located at a first position between the first lateral position and the second lateral position such that a space circumscribed by the base member, the movable member and the link members coincides at least in part with a space between a plane being parallel to said pulley plane at an innermost edge of the movable member, and said pulley plane also called main central plane of said pulley, in at least one position of the pulley.

According to a particularly preferred embodiment a bicycle rear derailleur is comprising: a base member; a movable member that supports a chain guide including a first pulley that rotates around a first pulley axis, wherein the pulley has a pulley plane or a main central plane; and a first linking member coupled between the base member and the movable member so that the chain guide moves laterally relative to the base member between a first lateral position and a second lateral position; wherein the pulley plane intersects the first linking member when the chain guide is located at a first position between the first lateral position and the second lateral position.

In another preferred embodiment a bicycle rear derailleur is comprising: a base member; a movable member that supports a chain guide including a first pulley that rotates around a first pulley axis, wherein the pulley has a pulley plane or a main central plane; and a first linking member coupled between the base member and the movable member so that the chain guide moves laterally relative to the base member between a first lateral position and a second lateral position; wherein the first linking member is coupled to the base member for pivoting around a first pivot axis that extends across all components at the coupling of the first linking member and the base member; wherein the first linking member is coupled to the movable member for pivoting around a second pivot axis that extends across all components at the coupling of the first linking member and the movable member; and wherein the pulley plane intersects at least one of the first pivot axis or the second pivot axis when the chain guide is located at a first position between the first lateral position and the second lateral position.

In further preferred embodiments one or more of the following features could be implemented:
- said coincidence in space occurs in a rest position of said derailleur;
- the derailleur is further comprising a biasing member that biases the movable member so that the chain guide is set at the first lateral position, wherein the pulley plane intersects the first linking member when the chain guide is located at the first lateral position;
- the first lateral position is a laterally outermost position of the chain guide;
- the derailleur is further comprising a second linking member coupled between the base member and the movable member so that the chain guide moves laterally relative to the base member between the first lateral position and the second lateral position, wherein the second linking member is disposed laterally outward from the first linking member;
- the pulley plane intersects the second linking member when the chain guide is located at a second position between the first lateral position and the second lateral position;
- the first position is the same as the second position;
- the pulley plane intersects the second linking member when the chain guide is located at the first lateral position;
- the pulley plane intersects a space between the first linking member and the second linking member when the chain guide is located at the first position;
- the plane parallel to said pulley at a laterally innermost edge of the movable member, also refferred to as a movable member plane intersects an innermost surface of the movable member and is oriented substantially parallel to the pulley plane, and wherein at least a portion of a space between the pulley plane and the movable member plane intersects the space between the first linking member and the second linking member;
- the movable member plane intersects at least one of the first linking member or the second linking member when the chain guide is located at the first position;
- the derailleur is further comprising a biasing member that biases the chain guide so that the chain guide is set at the first lateral position, wherein the movable member plane intersects the first linking member when the chain guide is located at the first lateral position;
- the movable member plane intersects the second linking member when the chain guide is located at the first lateral position;
- the movable member plane intersects the space between the first linking member and the second linking member when the chain guide is located at the first position;
- the derailleur is further comprising:
   a chain pushing member disposed between the first pulley and the movable member;
wherein the chain pushing member is dimensioned to avoid interference with the first linking member when the chain guide is located at the laterally outermost position;
- the chain pushing member is mounted for rotation around a chain pushing member rotational axis that is offset from the first pulley axis;
- the first pulley rotates together with the chain pushing member around the chain pushing member rotational axis;
- the derailleur is further comprising a second pulley mounted to the chain guide for rotation around a second pulley axis, wherein the second pulley also rotates around a rotational axis that is offset from the second pulley axis;
- the pulley plane intersects the base member when the chain guide is located at a laterally outermost position;
- the first linking member is pivotably coupled between the base member and the movable member at a first pivot location and at a second pivot location;
wherein a first width of the first linking member at the first pivot location is different from a second width of the first linking member at the second pivot location;
- the first width is less than the second width;
- the first linking member straddles one of the base member or the movable member, and
wherein the first linking member is straddled by the other one of the base member or the movable member;
- first linking member straddles the movable member, and wherein the first linking member is straddled by the base member;
- the base member includes a mounting surface for facing a bicycle frame, wherein the mounting surface faces laterally outward;
- the base member includes an outer casing coupler dimensioned to couple to an outer casing of a Bowden cable, wherein the outer casing coupler is disposed laterally inward from the mounting surface;
- the outer casing coupler is structured to terminate the outer casing of the Bowden cable;
- the outer casing coupler includes an outer casing receiving bore that has a bore axis, wherein the bore axis is inclined relative to the pulley plane from a laterally outer upper portion to a laterally inner lower portion;
- the derailleur is further comprising a cable attachment member for attaching an operating cable that moves to operate the derailleur, wherein the cable attachment member is disposed laterally inward from the mounting surface;
- the cable attachment member is disposed laterally inward from the mounting surface when the chain guide is located at a laterally outermost position;
- the derailleur is further comprising a biasing member that biases the chain guide so that the chain guide is set at the first lateral position, wherein the pulley plane intersects the at least one of the first pivot axis or the second pivot axis, in particular the first pivot axis when the chain guide is located at a laterally outermost position of the chain guide;
- the derailleur is further comprising a biasing member that biases the movable member so that the chain guide is set at the first lateral position, wherein the movable member plane intersects the at least one of the first pivot axis or the second pivot axis when the chain guide is located at the first lateral position, being in particular a laterally outermost position of the chain guide;
- the movable member plane intersects the second pivot axis when the chain guide is located at the first lateral position.
- the movable member plane intersects the first pivot axis when the chain guide is located at the first lateral position.
- at least a portion of the first pivot axis is disposed on a laterally inner side of the pulley plane, and wherein at least a portion of the second pivot axis is disposed on a laterally outer side of the pulley plane;
- the second pivot axis is disposed entirely on the laterally outer side of the pulley plane;
- the base member is structured to be mounted at a location from approximately 180° to approximately 240° relative to a rotational axis of a rear wheel of the bicycle;
- the base member includes an outer casing coupler dimensioned to couple to an outer casing of a Bowden cable, wherein the outer casing coupler is positioned to be located rearward from the rotational axis;
- the base member includes a mounting surface for facing a bicycle frame, wherein the mounting surface faces laterally outward;
- the outer casing coupler is disposed laterally inward from the mounting surface;
- the outer casing coupler is dimensioned to terminate the outer casing of the Bowden cable;
- the outer casing coupler includes an outer casing receiving bore that has a bole axis, wherein the bore axis is inclined relative to a vertical plane from a laterally outer upper portion to a laterally inner lower portion;
- the derailleur is further comprising a cable attachment member for attaching to an operating cable that moves to operate the derailleur, wherein the cable attachment member is disposed rearward from the rotational axis;
- the cable attachment member is disposed laterally inward from the mounting surface;

In a preferred embodiment the cable attachment member is disposed laterally inward from the mounting surfaces when the chain guide is located at a laterally outermost position.

The chain guide could eventually include a second pulley that rotates around a second pulley axis, wherein the first pulley is disposed above the second pulley, and wherein the first pulley is located at a range of from approximately 220° to approximately 270° relative to the rotational axis when the chain guide is disposed in a laterally outermost position.

Additional inventive features will become apparent from the description below, and such features alone or in combination with the above features may form the basis of further inventions as recited in the claims.

### BRIEF DESCRIPTION OF THE DRAWINGS

Fig. 1 is a laterally outer view of a particular embodiment of a rear derailleur in a high speed position;

Fig. 2 is a laterally inner view of the derailleur;

Fig. 3 is a top view of the derailleur in the high speed position;

Fig. 4 is a bottom view of the derailleur in the high speed position;

Fig. 5 is a front view of the derailleur in the high speed position;

Fig. 6 is a rear view of the derailleur in the high speed position;

Fig. 7 is a side view of the derailleur in a low speed position;

Fig. 8 is a top view of the derailleur in the low speed position;

Fig. 9 is a bottom view of the derailleur in the low speed position;

Fig. 10 is a front view of the derailleur in the low speed position;

Fig. 11 is a rear view of the derailleur in the low speed position; and

### DETAILED DESCRIPTION OF THE EMBODIMENTS

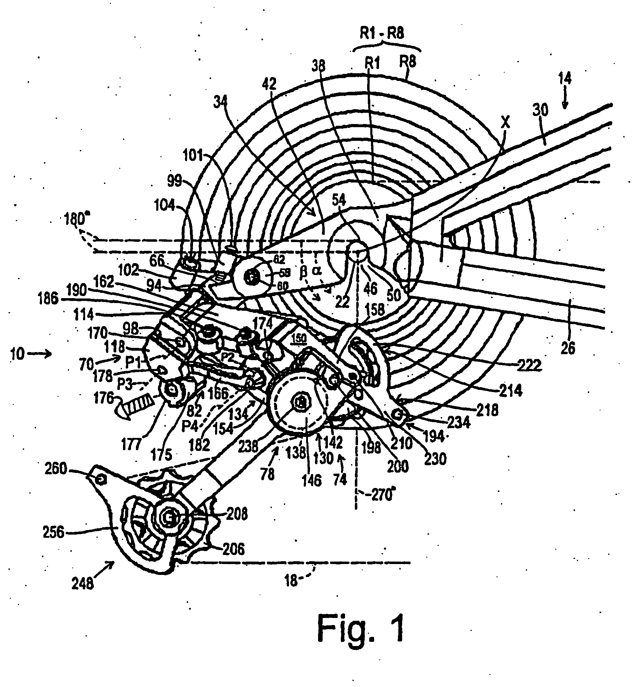

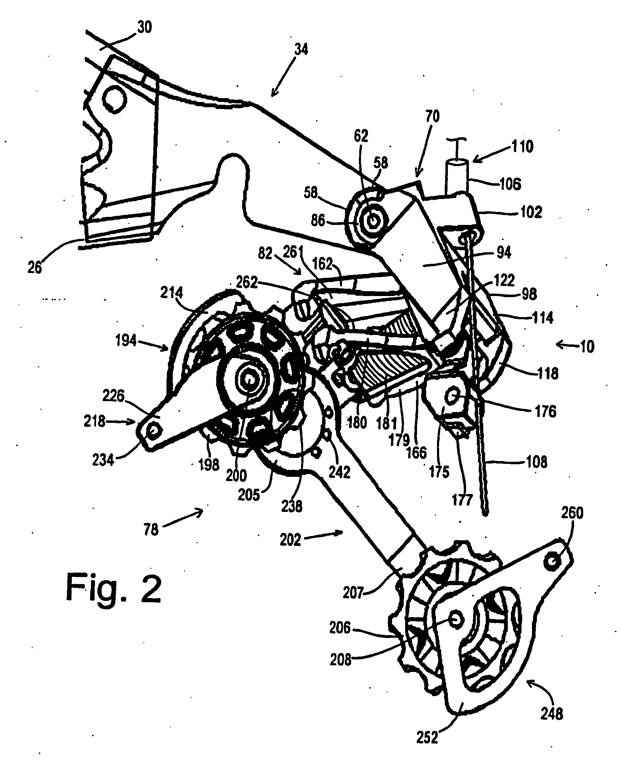

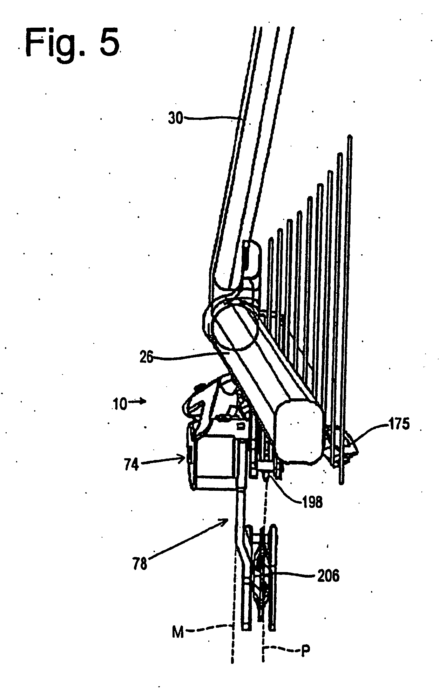

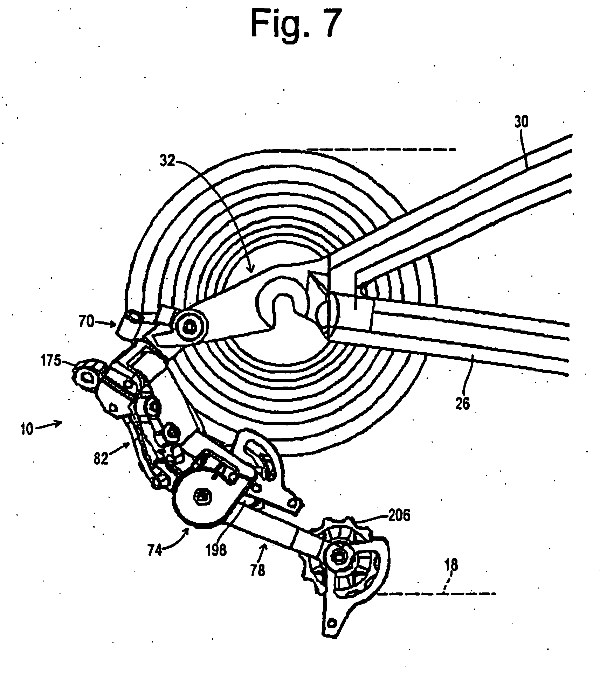

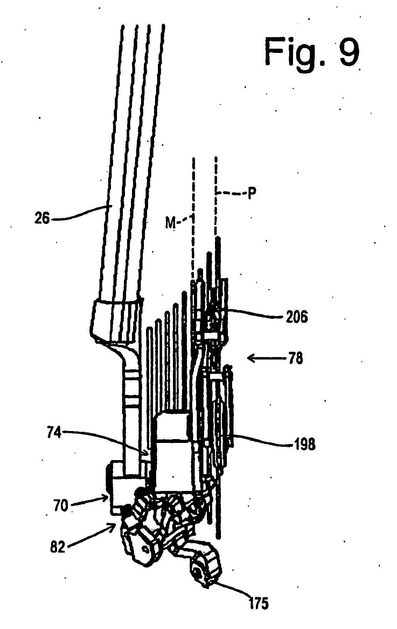

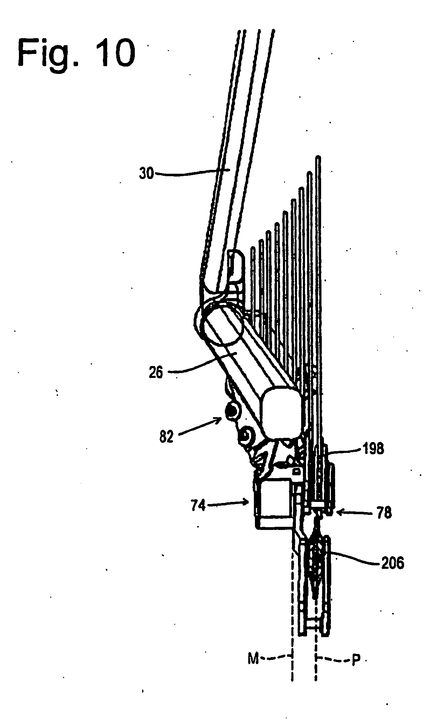

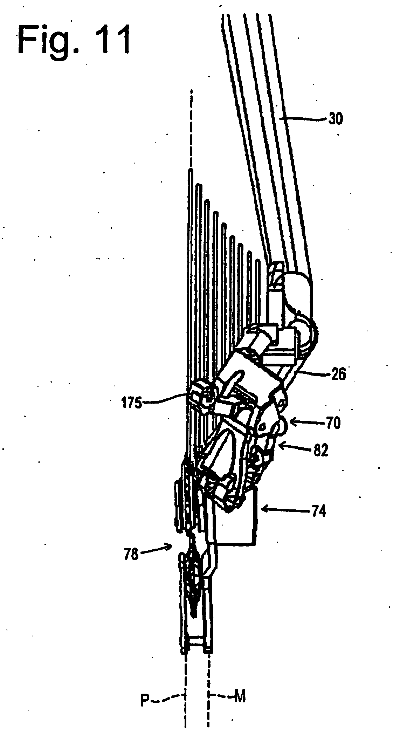

Figs. 1-11 are various views of a particular embodiment of a low profile derailleur 10 in various positions. For example, Fig. 1 is a laterally outer view of rear derailleur 10, and Fig. 2 is a rear view of derailleur 10. As shown in Fig. 1, rear derailleur 10 is attached to the rear portion of a bicycle frame 14 for guiding a chain 18 among a plurality of rear sprockets R1-R8 that rotate coaxially around a rear wheel axle 22 supported to frame 14, wherein axle 22 defines a rotational axis X.

Bicycle frame 14 is part of an overall bicycle frame that includes a chain stay 26, a seat stay 30 and a frame end 34 (commonly referred to as a dropout) that joins chain stay 26 and seat stay 26 together, typically by welding chain stay 26 and seat stay 30 to frame end 34. Conceptually, each of these frame structures is well known. However, this embodiment employs a configuration of frame end 34 that differs from common frame ends. More specifically, frame end 34 comprises a forward portion 38 and a rearward portion 42, wherein forward portion 38 extends from chain stay 26 and seat stay 30 to a horizontal position aligned with rotational axis X, and rearward portion 42 extends from the horizontal position aligned with rotational axis X rearward. A junction between forward portion 38 and rearward portion 42 forms an axle receiving slot 46 dimensioned to receive rear axle 22 therein. In this embodiment, axle receiving slot 46 is oriented substantially vertical with a slight incline and includes an open end 50 and a closed end 54, wherein open end 50 is disposed below closed end 54. Rearward portion 42 extends rearward and downward at an incline and forms a derailleur attachment structure in the form of a laterally projecting annular mounting boss 58 with an opening 60 dimensioned to receive a derailleur mounting bolt 62 therein. Of course, in some embodiments mounting boss 58 need no project laterally, in which case the surface of opening 60 forms the derailleur attachment structure. In this embodiment, opening 60 may be located from approximately 180° to approximately 240° relative to rotational axis X, or, to facilitate measurement independently of axle 22, from approximately 180° to approximately 240° relative to closed end 54 of axle receiving slot 46. Rearward portion 42 of frame end 34 extends further rearward from mounting boss 58 to form a position setting abutment 66 that functions in a manner discussed below.

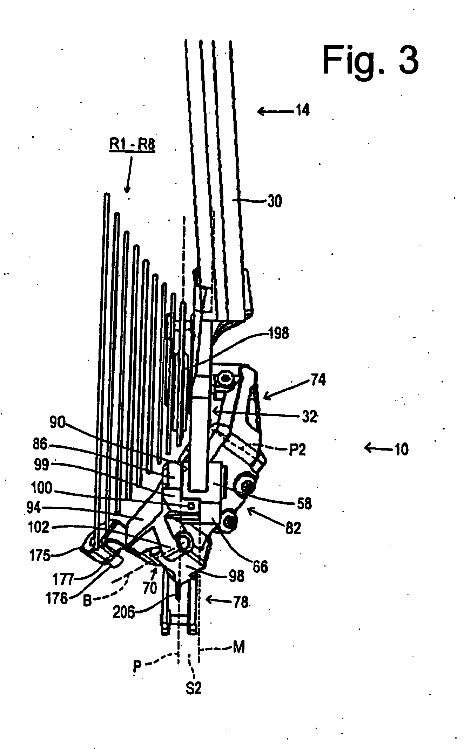

Derailleur 10 comprises a base member 70, a movable member 74 that supports a chain guide 78, and a linking mechanism 82 coupled between base member 70 and movable member 74 so that chain guide 78 moves laterally relative to base member 70. As best seen in Figs. 2 and 3, base member 30 comprises an annular mounting boss 86 with a mounting surface 90 that faces laterally outward to face mounting boss 58 on frame end 34, a transition portion 94 that extends rearward and downward at an incline from mounting boss 86, and a link coupling portion 98 disposed at a lower end portion of extension portion 94.

As best seen in Figs. 1 and 3, an adjuster mounting boss 99 extends rearward and then laterally outward from mounting boss 86. A laterally outer portion of adjuster mounting boss 99 includes an adjuster mounting structure in the form a threaded opening 100 dimensioned to threadingly engage an adjuster in the form of an adjusting screw 101. The tip of adjusting screw 101 abuts against position setting abutment 66 on frame end 34. Thus, the rotational position between frame end 34 and base member 70 may be adjusted simply by rotating adjusting screw 101.

An outer casing coupler 102 in the form of a hollow cylinder is disposed on an upper portion of transition portion 94, wherein outer casing coupler 102 is dimensioned to couple to and terminate an outer casing 106 of a Bowden cable 110 in a known manner. Outer casing coupler 102 is positioned to be located rearward from rotational axis X and, more particularly, rearward from frame end 34 and at least partially laterally inward from mounting surface 90 of base member 70 as shown in Fig. 3. Outer casing coupler 102 includes an outer casing receiving bore 104 having a bore axis B that is inclined relative to a pulley plane, or main central plane P described below. If desired, a cable adjusting bolt (not shown), the concept and structures of which are well known, may be mounted in outer casing receiving bore 104 so as to be disposed between outer casing coupler 102 and outer casing 106.

As shown in Figs. 1 and 2, link coupling portion 98 includes a support wall 114, an outer link mounting ear 118 and an inner link mounting ear 122. In this embodiment, inner link mounting ear 122 is formed as an extension of transition portion 94 that inclines laterally inwardly from front to rear and from top to bottom, support wall 114 extends laterally outwardly from inner mounting ear 122 so as to incline rearwardly from top to bottom and from transition portion 94 to the laterally outer end, and outer link mounting ear 118 extends downwardly from support wall 114 so as to incline laterally inwardly from front to rear and from top to bottom.

Movable member 74 comprises a main body 130 and a link mounting frame 134. In this embodiment, main body 130 comprises a generally cylindrical member that houses a torsion coil spring 138, one end of which is inserted into a spring mounting opening 142 formed in a laterally outer side wall 146 of main body 130. Link mounting frame 134 comprises an upper link mounting boss 150, a lower link mounting boss 154, and an upper chain guide link mounting frame 158, all of which are formed as one piece with main body 130.

Linking mechanism 82 comprises linking members in the form of a laterally outer upper link 162 and a laterally inner lower link 166. A first end of upper link 162 is straddled by link coupling portion 98 of base member 70 and is pivotably connected thereto by a pivot shaft 170 that defines a pivot axis P1. The second end of upper link 162 is forked to straddle upper link mounting boss 150 of link mounting frame 134 of movable member 74 and is pivotably connected thereto by a pivot shaft 174 that defines a pivot axis P2. Because of this arrangement, a distance between the outermost edges of the first end of upper link 162 at base member 70 is less than a distance between the outermost edges of the second end of upper link 162 at movable member 74. An outer limit adjusting screw 186 and an inner limit adjusting screw 190 are mounted on upper link 162 to adjust the laterally outermost and laterally innermost positions of movable member 74, respectively, in a well known manner.

Similarly, a first end of lower link 166 is straddled by link coupling portion 98 of base member 70 and is pivotably connected thereto by a pivot shaft 178 that defines a pivot axis P3. An actuating arm 175 extends downwardly and laterally inwardly from the first end of lower link 166 so as to generally conform to the inclined contour formed by the outer peripheral surfaces of the plurality of sprockets R1-R8. A cable attachment structure in the form of a bolt 176 and a clamping washer 177 is provided at the outer end of actuating arm 175 to attach an inner cable 108 of Bowden cable 106 as shown in Fig. 2. As shown in Fig. 3, bolt 176 and washer 177 are disposed laterally inward from mounting surface 90 of base member 70 when chain guide 78 is located at a laterally outermost position.

Lower link 166 is forked beginning in close proximity to pivot shaft 178 to form legs 179 and 180 (Fig. 2) that extend toward movable member 74. Legs 179 and 180 straddle lower link mounting boss 154 of link mounting frame 134 of movable member 74 and is pivotably connected thereto by a pivot shaft 182 (Fig. 1) that defines a pivot axis P4. Because of this arrangement, a distance between the outermost edges of the first end of lower link 166 at base member 70 is less than a distance between the outermost edges of the second end of lower link 166 at movable member 74.

As shown in Fig. 2, legs 179 and 180 of lower link 166 receive a coiled return spring 181 therebetween. One end of spring 181 is connected to base member 70 at pivot shaft 170, and the other end of spring 181 is connected to movable member 74 at pivot shaft 182. As a result, spring 181 biases movable member 74 laterally outwardly.

Chain guide 78 comprises an upper chain guide link 194, a first or upper guide pulley 198 rotatably mounted to upper chain guide link 194 through a pivot shaft 200, a lower chain guide link 202, and a second or lower tension pulley 206 rotatably mounted to lower chain guide link 202 through a pivot shaft 208. Upper chain guide link 194 is pivotably connected to upper chain guide link mounting frame 158 through a pivot shaft 210. Upper chain guide link 194 comprises a chain pushing member 214 and a chain regulating unit 218. Chain pushing member 214 is disposed between upper chain guide link mounting frame 158 and guide pulley 198, with an arcuate portion 222 disposed in close proximity to the teeth on guide pulley 198. Chain pushing member 214 is provided to push chain 18 when switching chain 18 from a smaller diameter sprocket to a larger diameter sprocket and to prevent chain 18 from derailing from guide pulley 198. Chain pushing member 214 rotates around a chain pushing member rotational axis defined by pivot shaft 210, which in this embodiment is offset from a first pulley axis defined by pivot shaft 200. As a result, both guide pulley 198 and chain pushing member 214 rotate around the chain pushing member rotational axis defined by pivot shaft 210.

Chain regulating unit 218 comprises an inner plate 226, an outer plate 230 and a regulator pin 234. A radially inner end of inner plate 226 is coupled to pivot shaft 200, and a radially outer end of inner plate 226 is fastened to one end of regulator pin 234. A radially inner portion of outer plate 230 joins with chain pushing member 214 and is coupled to pivot shaft 210, and a radially outer end of outer plate 230 is fastened to the other end of regulator pin 234. Inner plate 226 helps to prevent chain 18 from derailing from guide pulley 198 when switching chain 18 from a larger diameter sprocket to a smaller diameter sprocket, and outer plate 230 helps to prevent chain 18 from derailing from guide pulley 198 when switching chain 18 from a smaller diameter sprocket to a larger diameter sprocket. Regulator pin 234 helps to prevent excessive radial movement of chain 18 and ensures that upper chain guide link 194 rotates counterclockwise around pivot shaft 210 in response to forward swinging of chain 18. However, chain regulating unit 218 may be omitted in some embodiments.

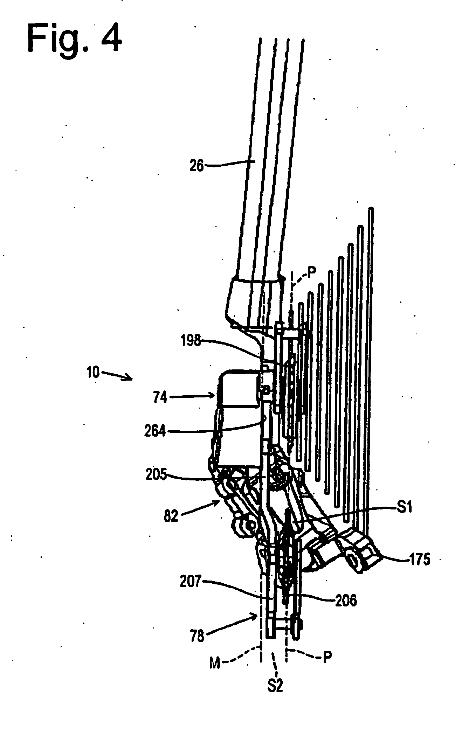

As shown in Fig. 2, an upper end 205 of lower chain guide link 202 is pivotably coupled to main body 130 of movable member 74 through a pivot shaft 238 and includes a plurality of, e.g., three spring coupling openings 242. The other end of spring 138 mentioned above is inserted into one of the spring coupling openings 242 to set a desired biasing force on lower chain guide link 202. As a result, lower chain guide link 202 is biased clockwise in Fig. 1. A lower end 207 of lower chain guide link 202 rotatably supports tension pulley 206 through pivot shaft 208 and nonrotatably supports a chain regulating unit 248. In this embodiment, as shown in Fig. 4, upper end 205 is substantially vertically straight and is laterally inwardly offset relative to lower end 207, which also is substantially vertically straight. As with chain regulating unit 218, chain regulating unit 248 comprises an inner plate 252, an outer plate 256 and a regulator pin 260. A radially inner end of inner plate 252 is coupled to pivot shaft 208, and a radially outer end of inner plate 252 is fastened to one end of regulator pin 260. In this embodiment, outer plate 256 is formed as a part of lower chain guide link 202 and supports pivot shaft 208. A radially outer end of outer plate 256 is fastened to the other end of regulator pin 260. Inner plate 252 helps to prevent chain 18 from derailing from tension pulley 206 when switching chain 18 from a larger diameter sprocket to a smaller diameter sprocket, and outer plate 256 helps to prevent chain 18 from derailing from tension pulley 206 when switching chain 18 from a smaller diameter sprocket to a larger diameter sprocket. Regulator pin 260 helps to prevent excessive radial movement of chain 18. Chain regulating unit 248 may be omitted in some embodiments.

In this embodiment, base member 70, movable member 74, chain guide 78 and linking mechanism 82 are dimensioned so that guide pulley 198 is located at a range of from approximately 220° to approximately 270° relative to rotational axis X when chain guide 78 is disposed in the laterally outermost position.

As shown in Fig. 4, guide pulley 198 has a pulley plane or main central plane P that bisects guide pulley 198. In this embodiment, each tooth on guide pulley 198 is symmetrical and centered on the pulley when viewed perpendicular to pivot shaft 200 so that pulley plane P is located in the center of guide pulley 198, and all of the pulley teeth lie in pulley plane P. In this embodiment, pulley plane P also bisects tension pulley 206. In order to provide a decreased laterally outward profile for derailleur 10, the components are structured so that pulley plane P intersects at least one of upper link 162 or lower link 166 when chain guide 78 is disposed in a position somewhere between a laterally outermost rest position and a laterally innermost position (such as the laterally outermost position shown in Fig. 4).

As used throughout herein, the word "intersect" has the ordinary meaning of having one or more points in common. Thus, the term also includes, for example, a tangent relationship. The laterally outermost position may be the laterally outermost position when derailleur 10 is removed from the bicycle. In this case, the laterally outermost position may be determined by the position of chain guide 78 with the derailleur at rest and subjected only to the biasing force of return spring 181, and the laterally innermost position is determined by the position of chain guide 78 when chain guide 78 is manually pulled to its laterally innermost position. Alternatively, the laterally outermost position may be determined by the position of chain guide 78 when it is set to be aligned with the smallest diameter rear sprocket R1, and the laterally innermost position may be determined by the position of chain guide 78 when it is set to be aligned with the largest diameter rear sprocket R8. The word "between" is used in an inclusive sense.

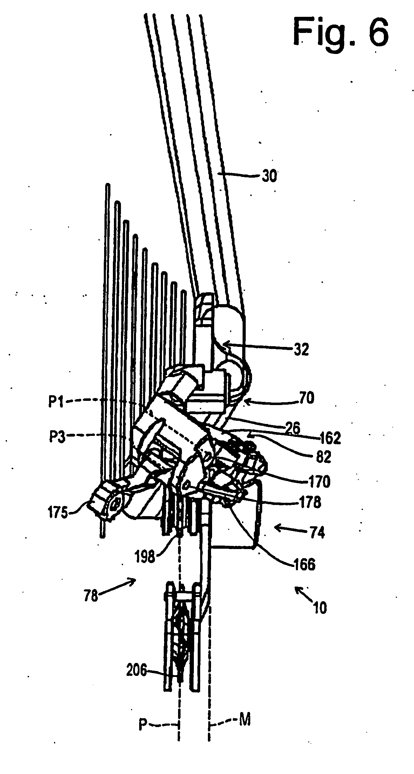

Furthermore, in this embodiment, pulley plane P intersects at least one of pivot axis P1 or pivot axis P3 when measured across all components at the coupling when chain guide 78 is disposed in a position somewhere between a laterally outermost rest position and a laterally innermost position (such as the laterally outermost position shown in Fig. 6). For example, pivot shaft 170 defines pivot axis P1 and couples upper link 162 to base member 70. The laterally outer tip of pivot shaft 170 is exposed at outer link mounting member 118, whereas the laterally inner tip of pivot shaft 170 is inserted into a blind bore (not shown) in inner link mounting member 122 so that the inner lateral tip is not exposed at inner link mounting member 122. The length of pivot axis P1 measured across all components at the coupling therefore extends from the laterally outer tip of pivot shaft 170 at pivot axis P1 to the laterally inner surface of inner link mounting member 122 at pivot axis P1. Similarly, pivot shaft 178 defines pivot axis P3 and couples lower link 166 to base member 70. The laterally outer tip of pivot shaft 178 is exposed at outer link mounting member 118, whereas the laterally inner tip of pivot shaft 178 is inserted into a blind bore (not shown) in inner link mounting member 122 so that the inner lateral tip is not exposed at inner link mounting member 122. The length of pivot axis P3 measured across all components at the coupling therefore extends from the laterally outer tip of pivot shaft 178 at pivot axis P3 to the laterally inner surface of inner link mounting member 122 at pivot axis P3.

In this embodiment, pulley plane P intersects both upper link 162 and lower link 166 as well as pivot axes P1 and P3 when chain guide 78 is disposed in a position somewhere between the laterally outermost position and the laterally innermost position, such as the laterally outermost position shown in Fig. 4. However, it is not necessary to intersect all recited components at all lateral positions of chain guide 78. For example, while at least one of pivot axes P1-P4 is disposed on a laterally inner side of pulley plane P, and at least one of pivot axes P1-P4 is disposed on a laterally outer side of pulley plane P, in this embodiment second pivot axis P2 as measured according to the definition above is disposed entirely on the laterally outer side of pulley plane P (as well as movable member plane M) in the position shown in Fig. 3. In this embodiment, pulley plane P intersects a space S1 between any facing surfaces (e.g., surfaces 261 and 262 shown in Fig. 2) of upper link 162 and lower link 166 as shown in Fig. 4. Pulley plane P also intersects base member 70 when chain guide 78 is disposed in a position somewhere between the laterally outermost position and the laterally innermost position, such as the laterally outermost position shown in Fig. 3.

As shown further in Fig. 4 (with spring 181 removed for clarity), a movable member plane M (or simply called a plane M) that is substantially parallel to pulley plane P intersects an innermost surface 264 of movable member 74. In this embodiment, movable member plane M is parallel to pulley plane P at a laterally innermost edge of the movable member and innermost surface 264 is coplanar with movable member plane M, although other configurations are possible since movable member 74 may have many different shapes. Movable member plane M intersects both upper link 162 and lower link 166, pivot axes P1 and P3, and the space S 1 between facing surfaces of upper link 162 and lower link 16 when chain guide 78 is disposed in a position somewhere between the laterally outermost position and the laterally innermost position. Furthermore, at least a portion of a space S2 between movable member plane M and pulley plane P intersects the space S 1 between facing surfaces of upper link 162 and lower link 16 when chain guide 78 is disposed in a position somewhere between the laterally outermost position and the laterally innermost position, such as the laterally outermost position shown in Fig. 4. In other words, the space S2 at least partially coincides with the space S1 circumscribed by the base member 70, the movable member 74 and the linking mechanism 82 when chain guide 78 is disposed in a position somewhere between the laterally outermost position and the laterally innermost position, such as the laterally outermost position shown in Fig. 4

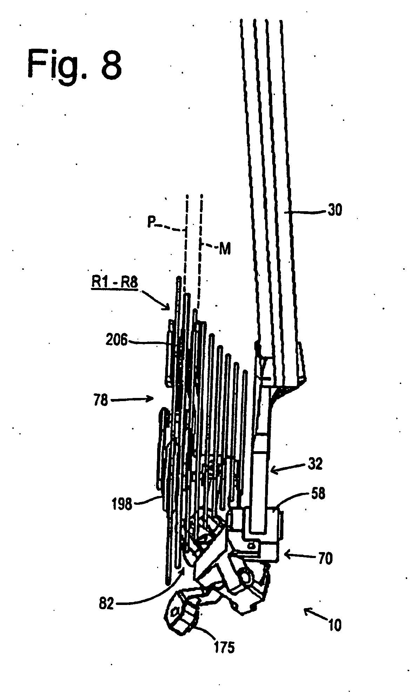

As shown in Figs. 3 and 8, derailleur 10 has a very low lateral profile. For example, when chain guide 78 is located in the laterally outermost position shown in Fig. 3, the components barely protrude laterally outward relative to frame 14. Actuating arm 175 and portions of linking mechanism 82 are disposed laterally inward from pulley plane P and movable member plane M and follow the diagonal contour of sprockets R1-R8, thereby forming a very compact structure. When chain guide 78 is located in the laterally innermost position shown in Fig. 8, mounting boss 58 is the laterally outermost portion of derailleur 10. In fact, mounting boss 58 does not even protrude laterally outward relative to chain stay 26 or seat stay 30. In this position, actuating arm 175 and linking mechanism 82 again following the diagonal contour of sprockets R1-R8.

Prior art derailleurs do not have the ability to have such a low profile. One reason is that the chain guide in prior art derailleurs has a chain pushing member that is formed as one piece with an inner plate that extends from the upper guide pulley to the lower tension pulley, and this inner plate limits the ability of the chain guide to move laterally outwardly. In the presently disclosed embodiment, chain pushing member 214 is dimensioned to as not to interfere with the ability of chain guide 78 to move laterally outwardly. The two-piece structure of chain guide 78 further facilitates such lateral movement. Furthermore, the base member and linking mechanism in prior art derailleurs are dimensioned to be mounted substantially below, or even in front of, the rotational axis X of the rear wheel, and this requires sufficient lateral spacing to ensure that the linking mechanism does not strike the sprockets during operation. Since base member 70, upper link 162, lower link 166 movable member 74 and chain guide 78 in the presently disclosed embodiment are dimensioned so that guide pulley 198 is located at a range of from approximately 220° to approximately 270° relative to rotational axis X when chain guide 78 is disposed in the laterally outermost position, the lateral distance required for the components further decreases because the linking mechanism is able to more closely follow the contour formed by the outer peripheral surfaces of the plurality of sprockets R1-R8. Of course, while many of the features described herein contribute to a markedly low profile derailleur, not all features are required, depending upon the application.

While the above is a description of various embodiments of inventive features, further modifications may be employed without departing from scope of the present invention. For example, the size, shape, location or orientation of the various components may be changed as desired. Components that an shown directly connected or contacting each other may have intermediate structures disposed between them. The functions of one element may be performed by two, and vice versa. The function of one element may be performed by another, and functions may be interchanged among the elements. The structures and functions of one embodiment may be adopted in another embodiment. It is not necessary for all advantages to be present in a particular embodiment at the same time. Thus, the scope of the invention should not be limited by the specific structures disclosed or the apparent initial focus or emphasis on a particular structure or feature, but by the appended claims.

## Claims

1. A bicycle rear assembly comprising:
a bicycle frame end (34) comprising
a main body defining an axle receiving opening (46) dimensioned to receive a bicycle wheel axle (22) therein to rotate around a rotational axis (X), the axle receiving opening being a slot (46) including an open end (50) and a closed end (54), wherein the bicycle frame end mainly extends in a main bicycle frame end plane including said slot (46), wherein the closed end (54) forms an origin of a reference system in the main bicycle frame end plane,
with a zero axis being mainly orthogonal to a vertical plane comprising the rotational axis (X) forward of the closed end; and
a rear derailleur comprising
a base member (70)
a movable member (74) that supports a chain guide (78) including a first pulley (198) that rotates around a first pulley axis; and
a first linking member (162, 166) coupled between the base member (70) and the movable member (74) so that the chain guide (78) moves laterally relative to the base member between a first lateral position and a second lateral position,
**characterized in that**
the bicycle frame end has a derailleur attachment structure (60) located from approximately 180° to approximately 240° relative to the closed end of the axle receiving slot (46) when rotating in a counterclockwise direction in the main bicycle frame end plane,
the base member (70) is structured to be directly mounted at a location on the bicycle frame end (34), the base member being mounted on said derailleur attachment structure.

2. The assembly according to claim 1, wherein the base member (70) includes an outer casing coupler (102) dimensioned to couple to an outer casing (106) of a Bowden cable (110), wherein the outer casing coupler (102) is positioned to be located rearward from the rotational axis (X).

3. The assembly according to claim 1 or 2, wherein the base member (70) includes a mounting surface (90) for facing a bicycle frame, wherein the mounting surface faces laterally outward.

4. The assembly according to claim 2 or 3, wherein the outer casing coupler (102) is disposed laterally inward from the mounting surface (90).

5. The assembly according to any one of claims 2 to 4, wherein the outer casing coupler (102) is dimensioned to terminate the outer casing (106) of the Bowden cable.

6. The assembly according to any one of claims 2 to 5, wherein the outer casing coupler (102) includes an outer casing receiving bore (104) that has a bore axis (B), wherein the bore axis (B) is inclined relative to a vertical plane (P) from a laterally outer upper portion to a laterally inner lower portion.

7. The assembly according to any one of claims 3 to 6, further comprising a cable attachment member for attaching to an operating cable that moves to operate the derailleur, wherein the cable attachment member is disposed rearward from the rotational axis (X).

8. The assembly according to claim 7, wherein the cable attachment member is disposed laterally inward from the mounting surface (90).

9. The assembly according to claim 8, wherein the cable attachment member is disposed laterally inward from the mounting surface when the chain guide (78) is located at a laterally outermost position.

10. The assembly according to any one of claims 1 to 9, wherein the chain guide (78) includes a second pulley (206) that rotates around a second pulley axis, wherein the first pulley (198) is disposed above the second pulley (206), and wherein the first pulley (198) is located at a range of from approximately 220° to approximately 270° relative to closed end of the axle receiving opening (46) when the chain guide (78) is disposed in a laterally outermost position.

11. A method of mounting a bicycle rear derailleur having a base member (70), a movable member (74) that supports a chain guide (78) including a first pulley (198) that rotates around a first pulley axis and a second pulley (206) below the first pulley to rotate around a second pulley axis, and a first linking member (162, 166) coupled between the base member and the movable member so that the chain guide (78) moves laterally relative to the base member between a laterally outermost position and a laterally innermost position, wherein the method comprises the steps of:
providing a bicycle frame end (34) comprising a main body defining an axle receiving opening (46) dimensioned to receive a bicycle wheel axle (22) therein to rotate around a rotational axis (X), the axle receiving opening being a slot (46) including an open end (50) and a closed end (54), wherein the bicycle frame end mainly extends in a main bicycle frame end plane including said slot (46), wherein the closed end (54) forms an origin of a reference system in the main bicycle frame end plane, with a zero axis being mainly orthogonal to a vertical plane comprising the rotational axis (X) forward of the closed end; and a derailleur attachment structure located from approximately 180° to approximately 240° relative to the axle receiving slot (46) when rotating in a counterclockwise direction,
mounting the base member (70) to the bicycle frame end directly at a location from approximately 180° to approximately 240° relative to the closed end of the axle receiving slot (46) when rotating in a counterclockwise direction in the main bicycle frame end plane; and
positioning the movable member (74) so that the first pulley (198) is located at a range of from approximately 220° to approximately 270° relative to closed end of the axle receiving slot (46) when the chain guide is located at the laterally outermost position.

12. The method according to claim 11 wherein the step of mounting the base member further comprises the step of mounting the base member (70) laterally inward of the bicycle frame member.

13. The method according to any one of claims 11 to 12 further comprising the step of positioning a terminating member (102) for an outer casing (106) of a Bowden cable on the base member (70) rearward of the rotational axis (X).

14. The method according to claim 13 wherein the step of positioning the terminating member (102) further comprises the step of positioning the terminating member laterally inward of the bicycle frame member.

15. The method according to any one of claims 12 to 14 further comprising the step of positioning an attachment structure for attaching an operating cable that moves to operate the derailleur rearward of the rotational axis (X).

16. The method according to claim 15 wherein the step of positioning the attachment structure further comprises the step of positioning the attachment structure laterally inward of the bicycle frame member.

## Patentansprüche

1. Fahrradheckanordnung, umfassend:
ein Fahrradrahmenende (34), umfassend
einen Hauptkörper, der eine Achsenaufnahmeöffnung (46) definiert, bemessen zum Aufnehmen einer Fahrradradachse (22) darin zur Rotation bezüglich einer Rotationsachse (X), wobei die Achsaufnahmeöffnung ein Schlitz (46) ist, der ein offenes Ende (50) und ein geschlossenes Ende (54) aufweist, wobei das Fahrradrahmenende sich im Wesentlichen in einer Hauptfahrradrahmenendebene erstreckt, einschließlich dem Schlitz (46), wobei das geschlossene Ende (54) den Ursprung eines Bezugsystems in der Hauptfahrradrahmenendebene bildet,
wobei eine Ursprungsachse im Wesentlichen orthogonal zu einer vertikalen Ebene vorliegt, die Rotationsachse (X) vorwärtig des geschlossenen Endes enthaltend; und
einen Heckderailleur, umfassend
ein Basiselement (70)
ein bewegliches Element (74), welches eine Kettenführung (78) einschließlich einer ersten Umlenkrolle (198) stützt, welche sich bezüglich einer ersten Umlenkrollenachse dreht; und
ein erstes Kopplungselement (162, 166), gekoppelt zwischen das Basiselement (70) und das bewegliche Element (74), so dass die Kettenführung (78) sich lateralwärts relativ zu dem Basisglied zwischen einer ersten Lateralposition und einer zweiten Lateralposition bewegt, **dadurch gekennzeichnet, dass** das Fahrradrahmenende über eine Derailleurbefestigungsstruktur (60) verfügt, befindlich von etwa 180° bis etwa 240° relativ zu dem geschlossenen Ende des Achsaufnahmeschlitzes (46), wenn sich drehend in einer Richtung entgegen dem Urzeigersinn in der Hauptfahrradrahmenendebene, wobei das Basiselement (70) ausgebildet ist um direkt montiert zu werden an einem Ort an dem Fahrradrahmenende (34), wobei das Basiselement an der Derailleurbefestigungsstruktur montiert ist.

2. Anordnung nach Anspruch 1, bei welcher das Basiselement (70) einen Außengehäusekopplungsmechanismus (102) enthält, bemessen zur Kopplung bezüglich einem Außengehäuse oder einer äußeren Hülle (106) eines Bowdenzuges (110), wobei der Außengehäusekopplungsmechanismus (102) angeordnet ist um sich rückwärtig oder hinter der Rotationsachse (X) zu befinden.

3. Anordnung nach Anspruch 1 oder 2, bei welcher das Basiselement (70) eine Montagefläche (90) enthält, um einem Fahrradrahmen gegenüberzustehen, wobei die Montagefläche lateralwärts nach außen gerichtet ist.

4. Anordnung nach Anspruch 2 oder 3, bei welcher der Außengehäusekoppler beziehungsweise der Außengehäusekopplungsmechanismus (102) lateralwärts innerlich von der Montagefläche (90) angeordnet ist.

5. Anordnung nach einem der Ansprüche 2 bis 4, bei welcher der Außengehäusekopplungsmechanismus (102) bemessen ist um das Außengehäuse (106) beziehungsweise die äußere Hülle (106) des Bowdenzuges abzuschließen.

6. Anordnung nach einem der Ansprüche 2 bis 5, bei welcher der Außengehäusekopplungsmechanismus (102) eine Außengehäuseaufnahmebohrung (104) enthält, welche über eine Bohrungsachse (B) verfügt, wobei die Bohrungsachse (B) relativ zu einer vertikalen Ebene (P) geneigt ist, von einem lateral äußeren oberen Abschnitt zu einem lateral inneren unteren Abschnitt.

7. Anordnung nach einem der Ansprüche 3 bis 6, ferner umfassend ein Kabelbefestigungselement zur Befestigung an einem Betätigungskabel, welches sich zur Betätigung des Derailleurs bewegt, wobei das Kabelbefestigungselement hinter oder rückwärtig von der Rotationsachse (X) angeordnet ist.

8. Anordnung nach Anspruch 7, bei welcher das Kabelbefestigungselement lateral innerlich oder innen angeordnet von der Montagefläche (90) angeordnet ist.

9. Anordnung nach Anspruch 8, bei welcher das Kabelbefestigungselement angeordnet ist lateralwärts innen von der Montagefläche, wenn die Kettenführung (78) befindlich ist bei einer lateralwärts äußersten Position.

10. Anordnung gemäß einem der Ansprüche 1 bis 9, bei welcher die Kettenführung (78) eine zweite Umlenkrolle (206) enthält, welche sich bezüglich einer zweiten Umlenkrollenachse dreht, wobei die erste Umlenkrolle (198) angeordnet ist oberhalb der zweiten Umlenkrolle (206) und wobei die erste Umlenkrolle (198) angeordnet ist in einem Bereich von etwa 220° bis etwa 270° relativ zu dem geschlossenen Ende der Achsenaufnahmeöffnung (46) wenn die Kettenführung (78) in einer lateralwärts äußersten Position angeordnet ist.

11. Verfahren zum Montieren eines Fahrradheckderailleurs, aufweisend ein Basiselement (70), ein bewegliches Element (74), welches eine Kettenführung (78) stützt, einschließlich einer ersten Umlenkrolle (198) die sich um eine erste Umlenkrollenachse dreht, sowie einer zweiten Umlenkrolle (206), unterhalb der ersten Umlenkrolle, um sich um eine zweite Umlenkrollenachse zu drehen, und ein erstes Kopplungselement (162, 166), gekoppelt zwischen das Basiselement und das bewegliche Element, so dass die Kettenführung (78) sich lateral relativ zu dem Basiselement bewegt zwischen einer lateral äußersten Position und einer lateral innersten Position, wobei das Verfahren die Schritte umfasst:
Bereitstellen eines Fahrradrahmenendes (34), umfassend einen Hauptkörper, der eine Achsaufnahmeöffnung (46) definiert, bemessen um eine Fahrradradachse (22) darin aufzunehmen zur Drehung herum um eine Rotationsachse (X), wobei die Achsaufnahmeöffnung oder Achsenaufnahmeöffnung ein Schlitz (46) ist, enthaltend ein offenes Ende (50) und ein geschlossenes Ende (54), wobei das Fahrradrahmenende sich maßgeblich oder im Wesentlichen in eine Hauptfahrradrahmenendebene erstreckt, die den Schlitz (46) enthält, wobei das geschlossene Ende (54) einen Ursprung eines Bezugssystems in der Hauptfahrradrahmenendebene bildet, wobei eine Ursprungsachse im Wesentlichen orthogonal vorliegt zu einer vertikalen Ebene, die die Rotationsachse (X) enthält, vorwärtig des geschlossenen Endes; und eine Derailleurbefestigungsstruktur, befindlich von etwa 180° bis etwa 240° relativ zu dem Achsaufnahmeschlitz (46), beim Drehen in einer Richtung entgegen dem Urzeigersinn,
Montieren des Basiselementes (70) an dem Fahrradrahmenende, unmittelbar bei einem Ort von etwa 180° bis etwa 240° relativ zu dem geschlossenen Ende des Achsaufnahmeschlitzes (46) beim Drehen in einer Richtung entgegen dem Urzeigersinn in der Hauptfahrradrahmenendebene; und
Positionieren des beweglichen Elementes (74), derart, dass die erste Umlenkrolle (198) angeordnet ist in einem Bereich von etwa 220° bis etwa 270° relativ zu dem geschlossenen Ende des Achsaufnahmeschlitzes (46), wenn die Kettenführung befindlich ist in der lateral äußersten Position.

12. Verfahren nach Anspruch 11, bei welchem der Schritt des Montierens des Basiselementes ferner den Schritt umfasst des Montierens des Basiselementes (70) lateralwärts innerlich des Fahrradrahmenelementes.

13. Verfahren gemäß einem der Ansprüche 11 bis 12, ferner umfassend den Schritt des Positionierens eines Abschlusselementes (102) für ein Außengehäuse beziehungsweise eine äußere Hülle (106) eines Bowdenzuges an dem Basiselement (70) rückwärtig oder hinter der Rotationsachse (X).

14. Verfahren gemäß Anspruch 13, bei welchem der Schritt des Positionierens des Abschlusselementes (102) ferner den Schritt umfasst des Positionierens des Abschlusselements lateralwärts innerhalb beziehungsweise innerlich des Fahrradrahmenelementes.

15. Verfahren gemäß einem der Ansprüche 12 bis 14, ferner umfassend den Schritt des Positionierens einer Befestigungsstruktur zur Befestigung eines Betätigungskabels, welches sich zum Betätigen des Derailleurs bewegt, rückwärtig der Rotationsachse (X).

16. Verfahren gemäß Anspruch 15, bei welchem der Schritt des Positionierens der Befestigungsstruktur ferner den Schritt umfasst des Positionierens der Befestigungsstruktur lateralwärts innerlich oder innerhalb des Fahrradrahmenelementes.

## Revendications

1. Assemblage arrière de bicyclette comprenant
une extrémité de cadre de bicyclette (34) comprenant
un corps principal définissant une ouverture de réception d'axe (46) dimensionné pour y recevoir un axe de roue de bicyclette (22), pour tourner autour d'un axe de rotation (X), l'ouverture de réception d'axe étant une fente (46) comprenant une extrémité ouverte (50) et une extrémité fermée (54), l'extrémité de cadre de bicyclette s'étendant sensiblement dans un plan d'extrémité de cadre de bicyclette principal comprenant ladite fente (46), l'extrémité fermée (54) formant une origine d'un système de référence dans le plan d'extrémité de cadre de bicyclette principal,
avec un axe zéro qui est sensiblement orthogonal à un plan vertical comprenant l'axe de rotation (X) à l'avant de l'extrémité fermée, et
un dérailleur arrière comprenant
un élément de base (70),
un élément mobile (74), qui supporte un guide de chaîne (78) comprenant une première poulie (198) qui tourne autour d'un premier axe de poulie ; et
un premier élément de liaison (162, 166), relié entre l'élément de base (70) et l'élément mobile (74) de sorte que le guide de chaîne (78) se déplace latéralement par rapport à l'élément de base, entre une première position latérale et une deuxième position latérale,
**caractérisé en ce que**
l'extrémité de cadre de bicyclette a une structure d'attache de dérailleur (60) située depuis approximativement 180° jusqu'à approximativement 240° par rapport à l'extrémité fermée de la fente de réception d'axe (46), lors d'une rotation dans une direction dans le sens inverse des aiguilles d'une montre dans le plan d'extrémité de cadre de bicyclette principal,
l'élément de base (70) est structuré pour être monté directement à un emplacement sur l'extrémité de cadre de bicyclette (34), l'élément de base étant monté sur la structure d'attache de dérailleur.

2. Assemblage selon la revendication 1, dans lequel l'élément de base (70) comprend un coupleur de gaine externe (102) dimensionné pour couplage à une gaine externe (106) d'un câble de Bowden (110), dans lequel le coupleur de gaine externe (102) est positionné pour être situé à l'avant de l'axe de rotation (X).

3. Assemblage selon la revendication 1 ou 2, dans lequel l'élément de base (70) comprend une surface de montage (90) pour faire face à un cadre de bicyclette, dans lequel la surface de montage fait face latéralement vers l'extérieur.

4. Assemblage selon la revendication 2 ou 3, dans lequel le coupleur de gaine externe (102) est disposé latéralement vers l'intérieur depuis la surface de montage (90).

5. Assemblage selon l'une quelconque des revendications 2 à 4, dans lequel le coupleur de gaine externe (132) est dimensionné pour terminer la gaine externe (106) du câble de Bowden (110).

6. Assemblage selon l'une quelconque des revendications 2 à 5, dans lequel le coupleur de gaine externe (102) comprend un alésage de réception de gaine externe (104) qui a un axe d'alésage (B), dans lequel l'axe d'alésage (B) est incliné par rapport à un plan vertical (P) depuis une partie latéralement externe supérieure vers une partie latéralement interne inférieure.

7. Assemblage selon l'une quelconque des revendications 3 à 6, comprenant, en outre, un élément d'attache de câble pour attachement à un câble d'actionnement qui se déplace pour actionner le dérailleur, dans lequel l'élément d'attache de câble est disposé à l'arrière de l'axe de rotation (X).

8. Assemblage selon la revendication 7, dans lequel l'élément d'attache de câble est disposé latéralement vers l'intérieur depuis la surface de montage (90).

9. Assemblage selon la revendication 8, dans lequel l'élément d'attache de câble est disposé latéralement vers l'intérieur depuis la surface de montage, lorsque le guide de chaîne (78) est situé à une position latéralement la plus extérieure.

10. Assemblage selon l'une quelconque des revendications 1 à 9, dans lequel le guide de chaîne (78) comprend une deuxième poulie (206) qui tourne autour d'un deuxième axe de poulie, dans lequel la première poulie (198) est située au-dessus de la deuxième poulie (206), et dans lequel la première poulie (198) est située dans une gamme comprise entre approximativement 220° et approximativement 270° par rapport à l'extrémité fermée de l'ouverture de réception d'axe (46) lorsque le guide de chaîne (78) est disposé dans une position latéralement la plus externe.

11. Procédé de montage d'un dérailleur arrière de bicyclette ayant un élément de base (70), un élément mobile (74) qui supporte un guide de chaîne (78) comprenant une première poulie (198) qui tourne autour d'un premier axe de poulie et une deuxième poulie (20) sous la première poulie, pour tourner autour d'un deuxième axe de poulie, et un premier élément de liaison (162, 166) relié entre l'élément de base et l'élément mobile de sorte que le guide de chaîne (78) se déplace latéralement par rapport à l'élément de base entre une position latéralement la plus externe et une position latéralement la plus interne, dans lequel le procédé comprend les étapes consistant à :
fournir une extrémité de cadre de bicyclette (34) comprenant un corps principal définissant une ouverture de réception d'axe (46) dimensionné pour y recevoir un axe de roue de bicyclette (22), pour tourner autour d'un axe de rotation (X), l'ouverture de réception d'axe étant une fente (46) comprenant une extrémité ouverte (50) et une extrémité fermée (54), dans lequel l'extrémité de cadre de bicyclette s'étend sensiblement dans un plan d'extrémité de cadre de bicyclette principal comprenant ladite fente (46), dans lequel l'extrémité fermée (54) forme une origine d'un système de référence dans le plan d'extrémité de cadre de bicyclette principal, avec un axe zéro qui est sensiblement orthogonal à un plan vertical comprenant l'axe de rotation (X) à l'avant de l'extrémité fermée; et une structure d'attache de dérailleur située entre approximativement 180° et approximativement 240° par rapport à la fente de réception d'axe (46) lors d'une rotation dans une direction dans le sens inverse des aiguilles d'une montre,
monter l'élément de base (70) à l'extrémité de cadre de bicyclette, directement à un emplacement compris entre approximativement 180° et approximativement 240° par rapport à l'extrémité fermée de la fente de réception d'axe (46) lors d'une rotation dans une direction dans le sens inverse des aiguilles d'une montre dans le plan d'extrémité de cadre de bicyclette principal, et
positionner l'élément mobile (74) de sorte que la première poulie (198) est située dans une gamme comprise entre approximativement 220° et approximativement 270° par rapport à l'extrémité fermée de la fente de réception d'axe (46) lorsque le guide de chaîne est situé au niveau de la position latéralement la plus externe.

12. Procédé selon la revendication 11, dans lequel l'étape de montage de l'élément de base comprend, en outre, l'étape consistant à monter l'élément de base (70) latéralement vers l'intérieur de l'élément de cadre de bicyclette.

13. Procédé selon l'une quelconque des revendications 11 à 12, comprenant, en outre, l'étape consistant à positionner un élément de terminaison (102) pour une gaine externe (106) d'un câble de Bowden sur l'élément de base (70), à l'arrière de l'axe de rotation (X).

14. Procédé selon la revendication 13, dans lequel l'étape de positionnement de l'élément de terminaison (102) comprend, en outre, l'étape consistant à positionner l'élément de terminaison latéralement vers l'intérieur de l'élément de cadre de bicyclette.

15. Procédé selon l'une quelconque des revendications 12 à 14, comprenant, en outre, l'étape consistant à positionner une structure d'attache, pour attacher un câble d'actionnement qui se déplace pour actionner le dérailleur vers l'arrière de l'axe de rotation (X).

16. Procédé selon la revendication 15, dans lequel l'étape de positionnement de la structure d'attache comprend, en outre, l'étape consistant à positionner la structure d'attache latéralement vers l'intérieur de l'élément de cadre de bicyclette.
